# EUROPEAN PATENT SPECIFICATION

(11) **EP 0 816 546 B1**
(45) Date of publication and mention of the grant of the patent: **09.06.2004**
(21) Application number: 97111096.0
(22) Date of filing: 03.07.1997
(51) Int. Cl.: D04B 35/32

(54) **Means for deterring lint and debris accumulation on the knitting elements of a circular knitting machine**
Vorrichtung zur Verhütung von Faseranhäufung an Strickelementen einer Rundstrickmaschine
Dispositif pour prévenir l'accumulation de duvets dans les éléments de tricotage d'un métier à tricoter circulaire

(30) Priority: 03.07.1996 US 674625
(43) Date of publication of application: 07.01.1998
(73) Proprietor: ALANDALE INDUSTRIES, Inc., Troy, North Carolina 27371 (US)
(72) Inventor: Gutschmit, Alan, Troy, North Carolina 27371 (US)
(74) Representative: Patentanwälte Ruff, Wilhelm, Beier, Dauster & Partner

(56) References cited:
- EP-A- 0 485 258
- DE-A- 1 635 796
- DE-B- 1 585 177
- US-A- 3 535 895
- US-A- 5 195 337

## Description

The present invention relates to a knitting machine according to the introductory part of claim 1.

One of the principal problems and concerns which has historically plagued the textile industry is the generation of lint and debris inherently caused by the handling and manipulation of textile yarn and fabric forming operations. Such problems are particularly acute in the production and handling of natural fibres such as cotton which characteristically contain dust, debris, foreign matter and like contaminants and moreover are by nature subject to the release of fibrous lint when handled.

The growing popularity and usage of open-end spun yarns has contributed to these problems because such yarns commonly contain a somewhat higher content of contaminants than do ring-spun yarns.

Such lint, debris and other contaminants, once released from the yams and constituent fibres, tend to become airborne and ultimately settle on the textile producing equipment.
If not removed, the progressive accumulation of such lint and debris will result in a gradual decrease in the quality of the textile fabric being produced and will negatively affect the proper operation and efficiency of the equipment, ultimately resulting in equipment damage or failure.

For example, in circular knitting machines, the lint, debris and other contaminants naturally released during the normal manipulation of the yarns being knitted tends to settle into the slots of the needle cylinder and the associated dial, contributing significantly to the wearing of the needles and sinkers, or other knitting elements, and can significantly accelerate the wear of these elements. Various techniques and devices have been developed over the years to address these problems, but only with typically modest levels of success and also with attendant disadvantages.

For example, conventional circular knitting machines are routinely equipped with fans and other air blowing devices of differing sorts, intended to slow the accumulation of lint and debris onto the exposed surfaces of the machines. Such devices, however, do not prevent lint accumulation and, more importantly, have limited impact on deterring or slowing the accumulation of lint and debris in the critical area of the cylinder and dial slots.

Hence, it is also commonplace conventionally to equip circular knitting machines with so-called flushing devices which are periodically actuated, typically at the completion of a roll of fabric, to deliver a quantity of lubricating oil into the cylinder slots (and in some cases also into the dial slots) to flush away accumulated lint and debris while at the same time contributing to lubrication of the knitting elements.

While such flushing operations are reasonably effective for their intended purpose, flushing operations do not address the root problem of deterring or preventing lint and debris accumulation. Also, flushing operations have the distinct disadvantage of soiling a portion of the fabric, necessitating that some quantity of the fabric be discarded as waste.

Also, the need to periodically flush the knitting machine slots with oil contributes to the cost of operation of the machines.

It was already known (DE 1585177) to enclose the area of knitting positions of a circular knitting machine by means of a housing having three separated sections. One section defines an enclosed air chamber outwardly of the needle cams. Pressurized air is delivered into this chamber from above and through a gap between a cylinder and a dial located radially inwardly of the cylinder. The pressurized air is sucked off through the bottom of the chamber.

It is accordingly a fundamental object of the present invention to provide a means of deterring, and hopefully largely preventing, the initial accumulation of lint, debris and other contaminants in the critical area of the knitting elements of a circular knitting machine, specifically, within the needle slots and also within the dial slots.

An ancillary object of the invention is to reduce and possibly eliminate the need to flus the cylinder and dial slots with oil. Ultimately, the object of the invention is to extend the useful life of the knitting elements of circular knitting machines, improve the efficiency of such machines.

This object is achieved by a knitting machine according to claim 1. Briefly summarized, the present invention contemplates that these objects can be achieved by equipping a circular knitting machine with a means by which a pressurized airstream can be directed to flow through the annular spacing between the cylinder and dial of such machines. More particulary, the present invention is expected to be applicable to essentially any circular knitting machine of the type having cylinder and a concentric dial supported for unitary rotation an a stationary frame. Fundamatentally, the present invention provides a means mounted to the frame for defining an air chamber spanning between the cylinder and the dial in communication with the annular spacing therebetween and an associated means for delivering a pressurized airstream into the chamber to escape outwardly therefrom through the annular spacing, thereby to deter accumulation of lint and debris on the cylinder and the dial in such area.

As will be recognized by persons skilled in the art, such circular knitting machines have the cylinder oriented in an upright disposition with the dial located radially outwardly of the cylinder such that the cylinder and dial rotate unitarily about a substantially vertical axis. The machine frame characteristically supports an annular arrangement of needle cams outwardly about the cylinder on an annular frame element or surface and, spaced thereabove, has another annular frame element, typically in the form of a ring, supporting an annular arrangement of dial cams concentric to and radially outwardly about the cylinder. Such frame elements enable the air chamber to be conveniently created by providing an annular wall extending about the circular knitting machine vertically between the two annular frame elements so as to define the annular air chamber outwardly of the needle cams and beneath the dial and dial cams. As will be understood, the knitting interaction between the needles of the cylinder and the sinkers or other dial elements in the dial occurs at the area of the annular spacing. Hence, the air flow of the pressurized air delivered into the chamber escaping upwardly through the annular spacing serves throughout the knitting operation to substantially counteract any tendency of lint, debris and other contaminants to settle into the cylinder and dial slots with considerably greater effectiveness than conventional fans, air blowing devices and flushing equipment.

Preferably, the annular wall defining the air chamber is fabricated of a series of adjoining wall elements, at least some of which are slidable or otherwise movable to provide open access to the cylinder and the dial as may be needed, for example, for servicing. It is also preferred that the pressurized airstream be delivered into the chamber at plural annular locations thereabout to promote uniform pressurization throughout the entire annular extent of the chamber and, in turn, a uniform annular air flow upwardly through the spacing between the cylinder and the dial. The airstream can be created in any conventional manner, one simple and effective means being the use of a centrifugal air pump drawing air from the ambient environment about the knitting machine. To ensure that the airstream is substantially clean, i.e., generally free of lint, debris and contaminants, so as not to contribute to the problem sought to be avoided, the intake to the pump preferably is equipped with a filter bag to remove such materials from the air. Optimally, the fan or other airstream generating device is operated continuously throughout the operation of the knitting machine.

### Brief Description of the Drawings

Fig. 1 is a perspective view of the operative knitting components of a generally conventional circular knitting machine which has been retrofitted to incorporate the improvement of the present invention for deterring accumulation of lint, debris and other contaminants onto such components; and
Fig. 2 is a vertical cross-sectional view taken through the knitting components of the machine of Fig. 1 along line 2-2 thereof.

### Detailed Description of the Preferred Embodiment

Referring now to the accompanying drawings, the improvement of the present invention is depicted in one contemplated embodiment as having been retrofitted to an existing circular knitting machine, generally indicated at 10, of substantially conventional construction. Of course, it is to be understood by those persons skilled in the art that the present invention may be equally adapted for retrofitting to other conventional forms of circular knitting machines and, moreover, may also be well adapted to be incorporated into new machines in the original manufacture thereof. All such variations, applications and potential embodiments of the present invention are contemplated and intended to be within the scope of the present invention.

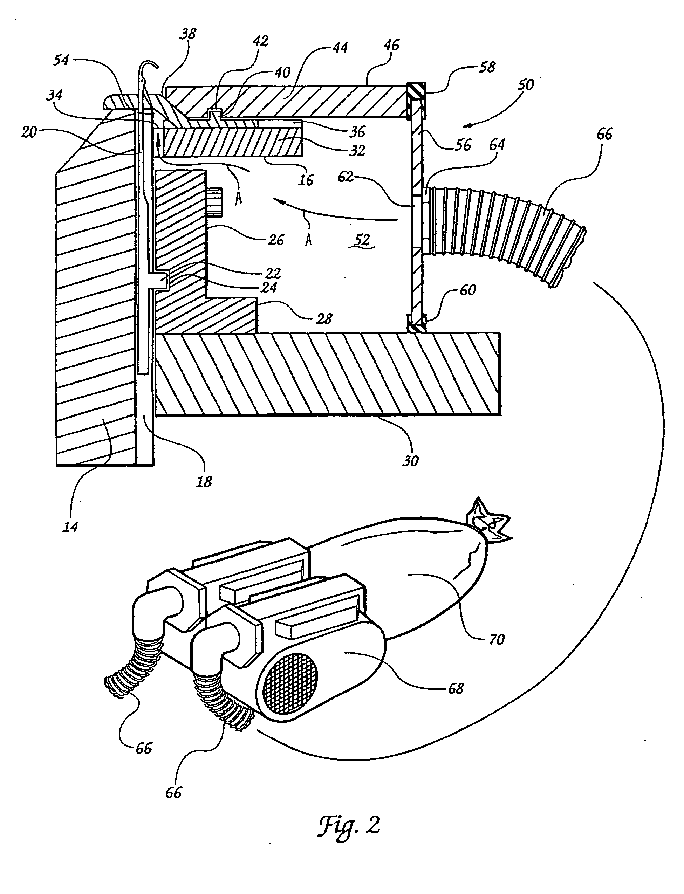

With specific reference to the circular knitting machine 10 shown in the drawings, the machine basically comprises a stationary floor-standing frame 12 (only the portions of which support the operative knitting components of the machine being shown) on which a needle cylinder 14 and a dial 16 (see Fig. 2) are supported for driven rotation to perform a conventional circular knitting operation.

As is conventional, the needle cylinder 14 is formed with a plurality of axial needle slots 18 in equally spaced side-by-side parallel relation about the entire outwardly facing cylindrical surface of the cylinder 14. Knitting needles 20, typically latch-type needles as shown in Fig. 2, are fitted slidably in the needle slots 18 for vertical reciprocation during the rotation of the cylinder 18. To control such needle reciprocation, the needles 20 are formed with control butts 22 which extend radially outwardly from the cylinder slots 18 and are guided within an annular trackway 24 defined by needle control cams 26 mounted on a repeating series of cam support blocks 28 mounted on a horizontal frame plate 30 of the machine frame 12 in closely spaced encircling relation to the needle cylinder 14.

As is also conventional, the dial 16 comprises a ring-like circular plate 32 rigidly mounted concentrically about the cylinder 14 at a close radially outward spacing thereto by a plurality of connecting bars 34 affixed to the cylinder 14 between adjacent slots 18 thereof at annular spacings about the cylinder 14 and extending therefrom radially outwardly to the dial 16. In this manner, the cylinder 14 and the dial 16 are rotated unitarily by the cylinder drive (not shown). Similarly to the cylinder 14, the upper radially extending surface of the dial 16 is formed with a plurality of slots 36 formed at equal spacings about the entire annular extent of the dial surface in radial orientation with respect to the cylinder 14, each dial slot 36 being located intermediate an adjacent pair of the cylinder slots 18. A corresponding plurality of sinkers 38 (or another conventional form of dial-mounted knitting elements) are slidably supported in the dial slots 36 for knitting reciprocation radially toward and away from the cylinder 14 in cooperation with the reciprocating needles 20 of the cylinder 14. For control of the radial reciprocation of the sinkers 38, the shank of each sinker 38 is formed with an upwardly projecting control butt 40 which follows a trackway 42 defined by a plurality of dial cams 44 supported in a circular arrangement by a circular ring-like plate 46, sometimes commonly referred to as the sinker cam ring, supported as part of the machine frame 12 on a series of support legs 48 extending upwardly from the horizontal frame plate 30 to support the plate 46 in generally parallel vertically spaced relation to the frame plate 30. In this disposition, the circular plate 46 overlies the dial 16, with the dial cams 44 facing downwardly to act on the control butts 40 of the sinkers 38.

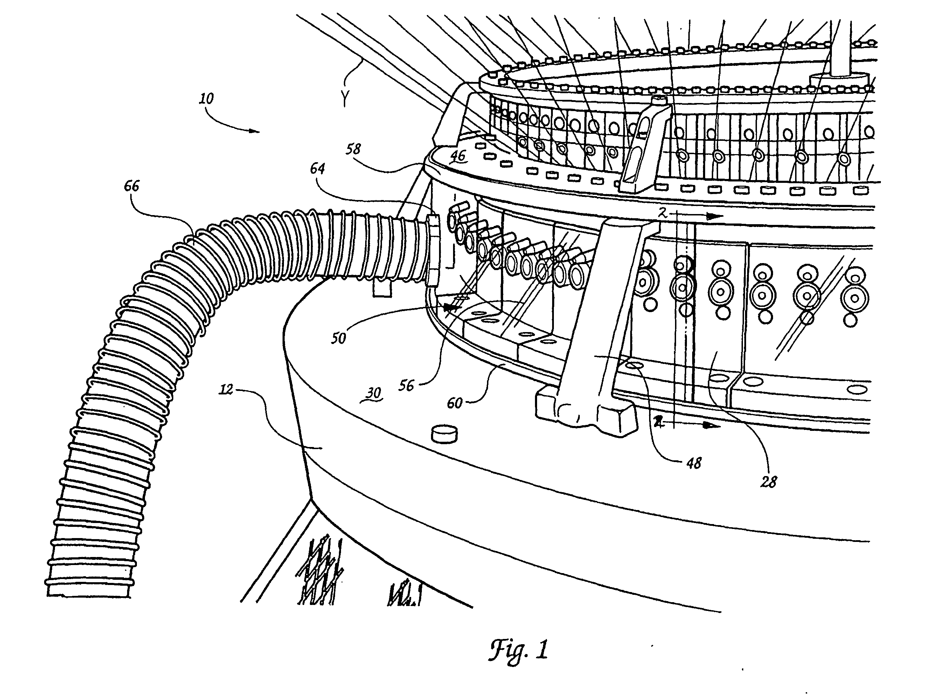

As will thus be understood, the cylinder needles 20 are continuously reciprocated upwardly and downwardly within their respective cylinder slots 18, while similarly the dial sinkers 38 are continuously reciprocated radially inwardly and outwardly within their respective dial slots 36, under the influence of the cylinder and dial cams 26,44 as the cylinder and dial 14,16 are unitarily rotated by the cylinder drive, whereby the needles 20 and sinkers 38 repetitively perform a cooperative knitting action on yarns Y (Fig. 1) fed to the needles 20. The tubular knitted fabric (not shown) thusly produced is withdrawn downwardly through the interior of the cylinder 14 and wound in roll form on a take-up mechanism (also not shown) supported therebelow.

As thus far described, the individual components and operation of the knitting machine 10 are essentially conventional. Those persons skilled in the art will recognize that the cylinder 14 and the dial 16, particularly their respective needle and sinker slots 18,36, are particularly exposed and subject to the settlement and accumulation thereon of lint, dust, debris, contaminants and the like, both carried airborne in the ambient environment around the knitting machine as a result of having been liberated during the traveling movement and handling of the constituent yarns being knitted and also liberated from the yarns at the precise location and as a result of the knitting manipulation performed on the yarns by the actions of the needles and sinkers. As already discussed above, such debris settling within the cylinder and dial slots 18,36 contributes substantially to the increase of friction generated by the continuous reciprocation of the needles 20 and sinkers 38 within the slots 18,36 and accelerates dramatically the wearing and ultimate failure of such knitting elements.

In accordance with the present invention, this problem is addressed and substantially avoided by enclosing the area between the two horizontal frame plates 30,46 by an annular wall arrangement, generally indicated at 50, radially outwardly thereof so as to define an annular air chamber 52 which can be pressurized to cause an annular airstream to be continuously emitted upwardly through the spacing 54 between the cylinder 14 and the dial 16 to prevent dust, debris, lint and contaminants from settling onto the knitting components in this area.

More particularly, the wall arrangement 50 basically comprises a series of curved plates 56 supported in vertical disposition between an annular channel element 58 mounted to the outward edge of the circular frame plate 46 and a corresponding annular channel element 60 mounted directly therebelow on the upward surface of the frame plate 30. The adjacent end edges of the curved plates 56 are partially overlapped with one another (see Fig. 1) so that the curved plates 56 collectively serve to define a continuous annular wall enclosing the annular chamber 52 between the plates 56, the needle cam support blocks 28 and the two frame plates 30,46. By utilizing individual overlapping plates 56, the wall arrangement 50 advantageously enables essentially any one or more of the individual plates 56 to be removed if and as necessary to perform service on the operational elements enclosed within the air chamber 52.

At least one curved plate 56, and preferably two or more annularly spaced ones of the curved plates 56, are formed therethrough with a circular air passageway 62 in which a fitting 64 is fixed to communicate the passageway and the interior of the air chamber 52 with a flexible air supply hose 66 connected to the fitting 64. The air supply hose 66 is connected to a source of clean pressurized air, which can be generated and supplied by any of various possible conventional means. By way of example but without limitation, the air supply hose or hoses 66 can be connected to a centrifugal air pump 68 (Fig. 2) situated adjacent the circular knitting machine so as to draw ambient air from the area surrounding the knitting machine 10 and pump the air under pressure through the hose or hoses 66 and into the air chamber 52. In such embodiment, it is highly preferred, if not nearly essential, that the intake to the centrifugal air pump 68 be equipped with a filter 70 so as to remove airborne lint, dust, debris and contaminants from the air entering the pump. In the preferred embodiment, at least two air supply hoses 66 are connected to the pump 68, with the two hoses 66 in turn being connected to curved plates 56 at diametrically opposite sides of the circular knitting machine 10 so as to achieve a substantially uniform pressurization about the entire annular extent of the chamber 52.

The operation and advantages of the present invention will thus be readily understood. Optimally, the centrifugal air pump 68 is energized continuously throughout the entire operation of the circular knitting machine. Hence, the annular air chamber 52 remains continuously pressurized, with the pressurized air delivered by the pump 68 having no means of escape from the air chamber 52 other than upwardly through the narrow annular spacing between the needle cylinder 14 and the dial 16, as signified in Fig. 2 by the directional arrows A. As the annular airstream A escapes upwardly through the narrow spacing 54, the force of the airstream 54 is sufficient to blow any airborne lint, debris, contaminants and the like away from the knitting area of the interacting needles and sinkers 20,38 and thereby prevent such materials from settling within the cylinder and dial slots 18,36 or otherwise on the cylinder 14 and dial 16. At the same time, as the escaping airstream A passes through the knitting area, the airstream serves to carry away any lint, debris, contaminants and the like liberated from the yarns by the knitting action of the needles and sinkers, thereby additionally minimizing any potential settlement and accumulation of these materials into the cylinder and dial slots. An attendant advantage is that the airstream assists in cooling the cylinder and dial slots and the knitting elements, thereby improving lubrication and prolonging the life of the knitting elements.

Apart from the advantage of limiting debris accumulation in the critical knitting area of the knitting machine, the present invention also achieves several other attendant advantages. First, with lint and debris accumulation in the cylinder slots being substantially reduced, if not largely eliminated, the need to periodically flush the needle slots with lubricating oil, as is considered necessary under conventional wisdom, is significantly reduced and it is contemplated under many circumstances can be eliminated. Hence, the capital expenditure of equipping circular knitting machines with flushing devices can be saved and the continuing expense of purchasing flushing oil can be likewise avoided. While it will continue to be desirable to utilize oiling devices for purposes of lubricating the needle and dial slots, the volume of oil required can be limited to only that amount necessary to achieve lubrication rather than the significantly greater amount necessary to perform a flushing operation. Overall, the present invention improves the cleanliness and operation of a circular knitting machine while at the same time reducing the capital and operating expenditures associated with such machines.

It will therefore be readily understood by those persons skilled in the art that the present invention is susceptible of a broad utility and application. Many embodiments and adaptations of the present invention other than those herein described, as well as many variations, modifications and equivalent arrangements, will be apparent from or reasonably suggested by the present invention and the foregoing description thereof, without departing from the substance or scope of the present invention. Accordingly, while the present invention has been described herein in detail in relation to its preferred embodiment, i.e., a circular knitting machine, it is to be understood that this disclosure is only illustrative and exemplary of the present invention and is made merely for purposes of providing a full and enabling disclosure of the invention which is useful for all kinds of knitting machines and especially for warp knitting machines and flat bed knitting machines. The foregoing disclosure is not intended or to be construed to limit the present invention or otherwise to exclude any such other embodiments, adaptations, variations, modifications and equivalent arrangements, the present invention being limited only by the claims appended hereto and the equivalents thereof.

## Claims

1. Knitting machine (10) having a frame (12) supporting a needle bed which carries a plurality of reciprocable knitting instruments (20) disposed in adjacent side-by-side relation for cooperative movement in the needle bed to perform fabric knitting operations, and having means for deterring lint and debris accumulation on the knitting instruments (20) which means (50) creates a pressurized air stream and defines an enclosed air chamber (52) outwardly of the needle cams (28), and means (66, 68) is provided for delivering a pressurized air stream into the chamber (52) and outwardly therefrom, **characterized by** the air stream flowing adjacent the needle bed (14) in the direction of reciprocation of the knitting instruments (20) and through an annular spacing (54) to prevent dust, debris, lint and contaminants from settling onto the knitting instruments (20) in the area of the spacing (54).

2. Knitting machine according to claim 1, **characterized** further in that the airstream delivering means (68) is operative to deliver a clean airstream generally free of lint and debris.

3. Knitting machine according to claim 1, **characterized in** further **in that** the airstream delivering means (68) includes means for filtering lint and debris from the airstream.

4. Knitting machine according to claim 1, **characterized** further in that the airstream delivering means (68) is operative to deliver the airstream substantially continuously during operation of the knitting machine.

5. Knitting machine according to claim 1, **characterized** further in that the airstream delivering means (68) is communicated with the chamber (52) at plural spacings therealong.

6. Knitting machine according to claim 1, **characterized** further in that the machine is a circular knitting machine (10) having a stationary frame (12) supporting a circular arrangement of knitting instruments (20) for rotation relative to the frame and for individual movement of the knitting instruments in a common direction of knitting motion to perform fabric knitting operations.

7. Knitting machine according to claim 6, **characterized** further in that the air chamber (52) is defined annularly about the circular arrangement of knitting instruments (20).

8. Knitting machine according to claim 6, **characterized** further in that the circular knitting machine (10) has a needle cylinder (14) carrying a plurality of axially movable needles (20) about the outward circumferential periphery of the cylinder and a frame (12) supporting the cylinder (14) in upright disposition for rotation to perform fabric knitting operations.

9. Knitting machine according to claim 8, **characterized** further in that the air chamber (52) defining means is openable for access to the cylinder (14).

10. Knitting machine according to claim 8 or 9, **characterized** further in that the air chamber (52) is defined to span between the cylinder (14) and the dial (16) in communication with the annular spacing therebetween and the pressurized airstream is delivered into the chamber.

11. Knitting machine according to claim 8, **characterized by** having an annular arrangement of needle cams (26) outwardly about the cylinder (14) on an annular frame element (30) and spaced thereabove another annular frame element (46) in the form of a ring supporting an annular arrangement of dial cams (32) concentric and radially outwardly about the cylinder (14) wherein an annular wall (56) is provided extending about the circular knitting machine vertically between the two annular frame elements (30, 46) so as to define the annular air chamber (52) outwardly of the needle cams (26) and beneath the dial (16) and the dial cams (32).

12. Knitting machine according to claim 8, **characterized** further in that the needle cylinder (14) is supported by the frame (12) in an upright disposition and the dial (16) is a concentric sinker dial radially outwardly of the cylinder (14), with the annular spacing formed between the cylinder (14) and the dial (16), for unitary rotation of the cylinder and the dial relative to the frame about a substantially vertical axis.

13. Knitting machine according to claim 9, **characterized** further in that the air chamber (52) defining means comprises a series of adjoining wall elements (56) at least some of which are movable to provide access to the cylinder (14) and the dial (16).

## Patentansprüche

1. Strickmaschine (10) mit einem Rahmen (12) zur Halterung eines Nadelbettes, welches eine Vielzahl zum Zweck der gemeinsamen Bewegung im Nadelbett zum Ausführen von Strickoperationen zur Herstellung von Strickware unmittelbar benachbart angeordneter Strickinstrumente (20) und mit einem Mittel zum Unterbinden von Ansammlungen von Flusen und Faserresten an den Strickinstrumenten (20), wobei das Mittel (50) einen Druckluftstrom erzeugt und außerhalb der Nadelnocken (28) eine abgeschlossene Luftkammer (52) definiert und Mittel (66, 68) zum Einleiten des Druckluftstroms in die Kammer (52) und zum Ableiten aus der Kammer bereitgestellt wird, **dadurch gekennzeichnet, dass** der am Nadelbett (14) in Richtung der Hin- und Herbewegung der Strickinstrumente (20) am Nadelbett (14) vorbei und durch einen Ringspalt (54) strömt, um zu verhindern, dass sich Staub, Faserreste, Flusen und Verunreinigungen im Bereich des Ringspaltes (54) auf den Strickinstrumenten (20) absetzen.

2. Strickmaschine nach Anspruch 1, die ferner **dadurch gekennzeichnet ist, dass** das Mittel (68) zum Bereitstellen des Luftstroms so beschaffen ist, dass es einen sauberen Luftstrom bereitstellt, der im Allgemeinen frei von Flusen und Faserresten ist.

3. Strickmaschine nach Anspruch 1, die ferner **dadurch gekennzeichnet ist, dass** das Mittel (68) zum Bereitstellen des Luftstroms ein Mittel zum Herausfiltern von Flusen und Faserresten aus dem Luftstrom beinhaltet.

4. Strickmaschine nach Anspruch 1, die ferner **dadurch gekennzeichnet ist, dass** das Mittel (68) zum Bereitstellen des Luftstroms so beschaffen ist, dass es den Luftstrom während der Tätigkeit der Strickmaschine praktisch ununterbrochen zur Verfügung stellt.

5. Strickmaschine nach Anspruch 1, die ferner **dadurch gekennzeichnet ist, dass** das Mittel (68) zum Bereitstellen des Luftstroms durch mehrere über die Kammer (52) verteilte Öffnungen mit dieser in Verbindung steht.

6. Strickmaschine nach Anspruch 1, die ferner **dadurch gekennzeichnet ist, dass** die Maschine eine Rundstrickmaschine (10) mit einem stationären Rahmen (12) zur Halterung einer kreisförmigen Anordnung von Strickinstrumenten (20) ist, die sich gegenüber dem Rahmen dreht und in der sich die Strickinstrumente einzeln in einer gemeinsamen Richtung der Strickbewegung bewegen, um Strickoperationen zur Herstellung von Strickware auszuführen.

7. Strickmaschine nach Anspruch 6, die ferner **dadurch gekennzeichnet ist, dass** die Luftkammer (52) ringförmig um die kreisförmige Anordnung der Strickinstrumente (20) definiert ist.

8. Strickmaschine nach Anspruch 6, die ferner **dadurch gekennzeichnet ist, dass** die Rundstrickmaschine (10) einen Nadelzylinder (14) mit einer Vielzahl axial beweglicher Nadeln (20) am Außenrand des Zylinders und einen Rahmen (12) zur Halterung des Zylinders (14) in einer aufrechten Stellung aufweist, um rotierend Strickoperationen zur Herstellung von Strickware auszuführen.

9. Strickmaschine nach Anspruch 8, die ferner **dadurch gekennzeichnet ist, dass** das Mittel zum Definieren der Luftkammer (52) geöffnet werden kann, damit man an den Zylinder (14) gelangen kann.

10. Strickmaschine nach Anspruch 8 oder 9, die ferner **dadurch gekennzeichnet ist, dass** die Luftkammer (52) so definiert ist, dass sie sich zwischen dem Zylinder(14) und dem Läufer (16) erstreckt und mit dem dazwischen befindlichen Ringspalt in Verbindung steht und dass der Druckluftstrom in diese Kammer eingeleitet wird.

11. Strickmaschine nach Anspruch 8, die durch eine auf einem ringförmigen Rahmenelement (30) an der Außenseite des Zylinders (14) befindliche ringförmige Anordnung von Nadelnocken (26) und einen weiteren in einem Abstand darüber angeordneten ringförmigen Rahmenelement (46) in Form eines Rings **gekennzeichnet** ist, welcher an der Außenseite des Zylinders (14) konzentrisch und radial eine ringförmige Anordnung von Läufernocken (32) trägt, wobei zwischen den beiden ringförmigen Rahmenelementen (30, 46) eine senkrecht um die Rundstrickmaschine herum verlaufende ringförmige Wand (56) bereitgestellt wird, sodass die ringförmige Luftkammer (52) außerhalb der Nadelnocken (26) und unterhalb des Läufers (16) und der Läufernocken (32) definiert ist.

12. Strickmaschine nach Anspruch 8, die ferner **dadurch gekennzeichnet ist, dass** der Nadelzylinder (14) in einer aufrechten Stellung durch den Rahmen (12) gehaltert wird und der Läufer (16) ein konzentrischer Platinenläufer in radialer Richtung außerhalb des Zylinders (14) ist, wobei der Ringspalt zwischen dem Zylinder (14) und dem Läufer (16) gebildet ist, damit sich der Zylinder und der Läufer im gleichen Sinne um eine im Wesentlichen senkrechte Achse drehen.

13. Strickmaschine nach Anspruch 9, die ferner **dadurch gekennzeichnet ist, dass** das Mittel zum Definieren der Luftkammer (52) eine Reihe benachbarter Wandelemente (56) umfasst, von denen mindestens einige verschiebbar sind, damit man an den Zylinder(14) und den Läufer (16) gelangen kann.

## Revendications

1. Machine à tricoter (10) avec support (12) soutenant des fontures, elles-mêmes portant un grand nombre d'instruments tricoteurs (20) à mouvement alternatif disposés côte à côte et de manière adjacente l'un par rapport à l'autre afin de permettre des mouvements coopératifs au niveau des fontures pour les opérations de tricotage de tissus, et avec des mécanismes de prévention des peluches et de l'accumulation de débris sur les instruments tricoteurs (20), dont les différents dispositifs (50) produisent un jet d'air sous pression et créent une chambre à air (52) close du côté extérieur par rapport aux cames d'aiguilles (28), d'autres dispositifs (66, 68) étant prévus pour émettre un jet d'air sous pression dans la chambre (52) et de là vers l'extérieur, **caractérisée par le fait que** le jet d'air circule de manière adjacente aux fontures (14), dans la direction de l'alternance des instruments tricoteurs (20) et à travers un espace (54) annulaire afin d'empêcher les poussières, débris, peluches et polluants de se déposer sur les instruments tricoteurs (20) à proximité de l'espace (54).

2. Machine à tricoter conforme à la revendication 1, également **caractérisée par le fait que** le dispositif d'émission du jet d'air (68), peut émettre un jet d'air propre généralement sans la moindre peluche ni le moindre débris.

3. Machine à tricoter conforme à la revendication 1, également **caractérisée par le fait que** le dispositif d'émission du jet d'air (68) comprend des mécanismes de filtration des peluches et des débris du jet d'air.

4. Machine à tricoter conforme à la revendication 1, également **caractérisée par le fait que** le dispositif d'émission du jet d'air (68) peut émettre le jet d'air quasiment en continu lorsque la machine à tricoter fonctionne.

5. Machine à tricoter conforme à la revendication 1, également **caractérisée par le fait que** le dispositif d'émission du jet d'air (68) communique avec la chambre (52) par divers espaces placés le long.

6. Machine à tricoter conforme à la revendication 1, également **caractérisée par le fait qu'**il s'agit d'une machine à tricoter circulaire (10) dotée d'un support fixe (12) soutenant un agencement circulaire d'instruments tricoteurs (20) permettant la rotation par rapport au support ainsi que des mouvements individuels des instruments tricoteurs dans une direction commune de tricotage pour les opérations de tricotage de tissus.

7. Machine à tricoter conforme à la revendication 6, également **caractérisée par le fait que** la chambre à air (52) est conçue de manière annulaire autour de l'agencement circulaire d'instruments tricoteurs (20).

8. Machine à tricoter conforme à la revendication 6, également **caractérisée par le fait qu'**il s'agit d'une machine à tricoter circulaire (10) possédant un cylindre à aiguilles (14) soutenant un grand nombre d'aiguilles (20) mobiles axialement autour de la périphérie circonférentielle extérieure du cylindre et un support (12) maintenant le cylindre (14) en position verticale de rotation pour les opérations de tricotage de tissus.

9. Machine à tricoter conforme à la revendication 8, également **caractérisée par le fait que** le dispositif créant la chambre à air (52) peut être ouvert pour permettre l'accès au cylindre (14),

10. Machine à tricoter conforme à la revendication 8 ou 9, également **caractérisée par le fait que** la chambre à air (52) est conçue pour occuper l'espace entre le cylindre (14) et le plateau (16) communicant avec l'espace annulaire entre les deux et **par le fait que** le jet d'air sous pression est émis dans la chambre.

11. Machine à tricoter conforme à la revendication 8, **caractérisée par** un agencement angulaire de cames d'aiguilles (26) entourant le cylindre (14) du côté extérieur, posées sur un élément de soutien annulaire (30) et réparties au-dessus d'un autre élément de soutien annulaire (46) ayant la forme d'un anneau soutenant un agencement annulaire de cames de plateau (32) concentriques et disposées radialement vers l'extérieur autour du cylindre (14), une paroi annulaire (56) s'étendant verticalement autour de la machine à tricoter circulaire entre les deux éléments de soutien annulaires (30, 46) de manière à créer la chambre à air annulaire (52) du côté extérieur par rapport aux cames d'aiguilles (26) et en dessous du plateau (16) et des cames du plateau (32).

12. Machine à tricoter conforme à la revendication 8, également **caractérisée par le fait que** le cylindre à aiguilles (14) est soutenu par le support (12) en position verticale et que le plateau (16) est un plateau à patine concentrique placé radialement du côté extérieur par rapport au cylindre (14), l'espace annulaire se formant entre le cylindre (14) et le plateau (16), pour la rotation unitaire du cylindre et du plateau par rapport au support autour d'un axe quasiment vertical.

13. Machine à tricoter conforme à la revendication 9, également **caractérisée par le fait que** le dispositif créant la chambre à air (52) comprend une série d'éléments muraux (56) contigus dont certains au moins sont mobiles pour permettre l'accès au cylindre (14) et au plateau (16).
